Europäisches Patentamt

(19) European Patent Office

Office européen des brevets

(11) Publication number: **0 069 589**
**A2**

# (12) EUROPEAN PATENT APPLICATION

(21) Application number: **82303543.1**

(22) Date of filing: **06.07.82**

(51) Int. Cl.³: **D 04 B 21/14**
**F 16 G 1/28**

(30) Priority: **06.07.81 GB 8120766**

(43) Date of publication of application:
**12.01.83 Bulletin 83/2**

(84) Designated Contracting States:
**AT BE CH DE FR IT LI LU NL SE**

(71) Applicant: **MILLIKEN INDUSTRIALS LIMITED**
**Wellington Mill Wellington Street**
**Bury Lancashire BL8 2AY(GB)**

(72) Inventor: **Berczi, Charles Nicholas**
**73 Alty's Lane**
**Ormskirk Lancashire(GB)**

(74) Representative: **Bass, John Henton et al,**
**REDDIE & GROSE 16 Theobalds Road**
**London WC1X 8PL(GB)**

(54) **Cover fabric for a toothed driving belt.**

(57) In a timing or like synchronous drive belt 10 composed of cords 11, rubber backing 12, rubber teeth 13, fabric jacket 14 and rubber facing 15, improved characteristics are obtained by using a novel fabric for the jacket. This fabric consists of a base fabric warp-knitted from fine, extensible yarns, and having incorporated in it at least one coarse, inextensible inlaid warp yarns and an extensible weft insertion.

FIG. 1

## IMPROVEMENTS IN DRIVING BELTS

The present invention relates to toothed surfaced driving belts and, more especially, to novel fabrics intended for use as covers or jackets for such belts.

Toothed belts are being increasingly used for transmitting synchronous drives, instead of sprocket chains, because of their smoother and quieter running, their lightness and cheapness, and their ability to absorb shock loads and to run without lubrication. Such belts may be used, for example, as timing belts for internal combustion engines. Conventional toothed belts consist of a tension member made of cords of steel, glass fibre, polyester or Kevlar, a rubber backing, moulded rubber teeth, and a rubberized fabric tooth facing. The tooth facing or jacket fabric is conventionally a woven fabric of polyamide fibres, in which the longitudinal members or warp threads are usually continuous filament nylon yarns and the transverse members or weft threads are highly stretchable continuous filament nylon yarns.

The ideal requirements for a cover fabric for a toothed driving belt include: rigidity (that is a resistance to distortion) in the warp direction, which facilitates manipulation during fabrication of the belt: substantial stretch in the weft direction to enable tooth contours to be followed: good flexibility in the weft direction: close thickness tolerance: low heat shrinkage at vulcanising temperatures: high bulk resilience: low moisture uptake: and good resistance oils, abrasion and compression fatigue.

These requirements are only partially met by conventional woven jacket fabrics. It is an object of the invention to provide improved fabrics and improved toothed belts incorporating such fabrics.

The fabrics according to this invention are composed of basic knitted structures with substantial warp inlays and weft insertions.

The knitted structure is preferably a warp knitted fabric of extensible, relatively fine continuous man-made filament yarns. There may be an inlaid warp of substantially inextensible and relatively coarse yarns to provide a high extension modulus in the warp direction. These may be composed of continuous man-made filaments, such as nylon, ployester, aramid or rayon, or of spun polyamide, polyester, rayon or cotton or mixtures thereof.

In the weft direction, a high degree of stretch may be provided by a weft insertion of extensible yarns of continuous man-made filaments.

Presently preferred aspects of the invention are defined in the accompanying claims but the disclosure of this specification as understood by those skilled in the art is not dependent thereon or limited thereby.

The fabric of the invention has advantages as a toothed belt cover material, as compared with conventional fabrics for this purpose, which include: greater stretchability, notably in the weft direction: lower bulk density: substantial dimensional stability in processing: absence of weft distortion and retention of soft handle in spread coating: and relative cheapness.

In the accompanying drawings:

Fig 1 is a cross-section of a toothed timing belt: and

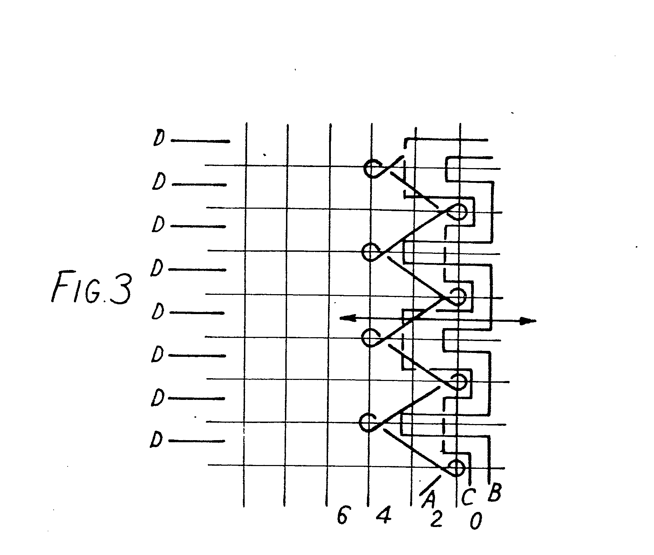

Figs 2 and 3 are respectively an illustration and a knitting diagram of a fabric in accordance with this invention.

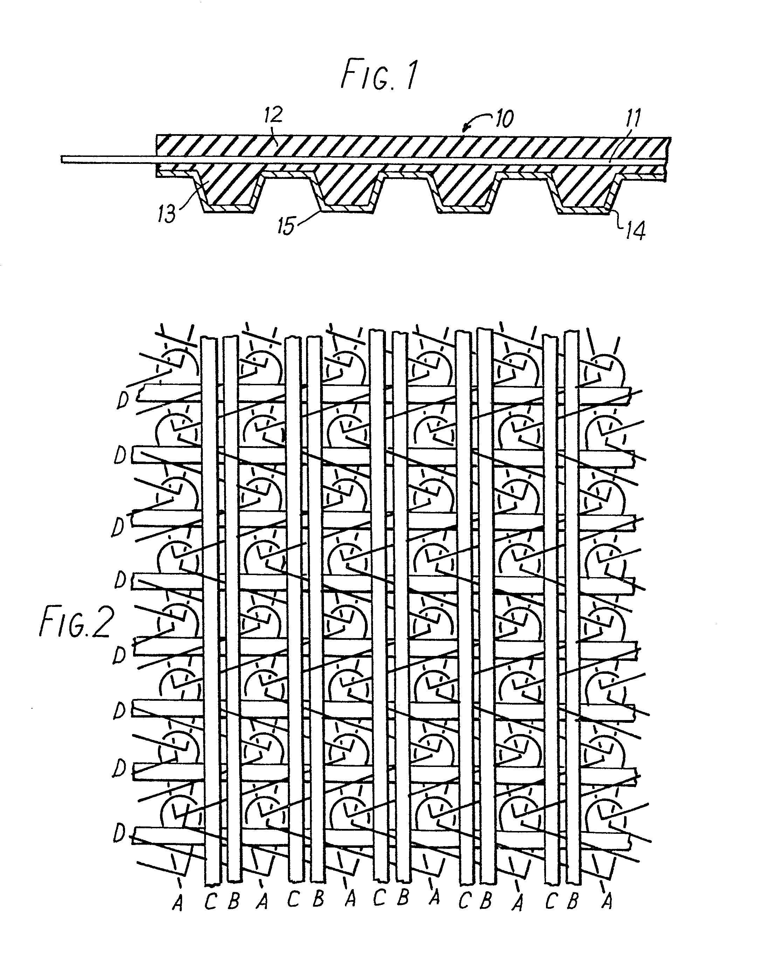

In the timing belt 10 shown in Fig. 1, a tension member 11, which may comprise cords of steel, glass fibre polyester or aramid, is backed by a rubber coating 12, for example of chloroprene and has on its other face teeth 13 moulded in rubber, also for example of chloroprene. The moulded teeth are covered by a jacket fabric 14 which conforms closely to the profile of the teeth and is covered by a chloroprene rubber layer 15.

The jacket fabric 14 may with advantage be a fabric in accordance with this invention, an example of which is shown in Fig. 2. In the latter Figure, the warp knitted base fabric is formed of relatively fine, stretch nylon yarns A, the inlay warp is of relatively coarse, high modulus yarns B and C and the weft insertion of stretch nylon yarns D. The fabric may be made by conventional knitting techniques with warp inlay and weft insertion. After being knitted, the fabric should be finished to develop its stretch properties by scouring in a slack condition, followed by hydro extraction and drying with minimal tension.

It may be incorporated in a timing belt, such as that of Fig. 1 by known procedures.

Example:  The following is one example of a fabric according to the invention, which is suitable for use as a timing belt jacket.

| | |
|---|---|
| Fabric structure: | As Fig. 2 |
| Gauge: | 18/2 |
| Knitting warp: | 78 dtex stretch nylon 66 |
| Inlay warp: | 1400 dtex nylon 66 |
| Weft insertion: | 2 x 78 dtex stretch nylon 66 |
| Courses per inch (loom state): | 40    (16 per cm) |
| Wales per inch (loom state) | 19    (7.6 per cm) |
| Weight, loom state: | 215 $g/m^2$ |
| Weight, finished: | 346 $g/m^2$ |

The superior stretch properties which, together with its low bulk density and cheapness, gives the fabric an advantage over conventional timing belt jacket fabrics, are illustrated by the following tabulated load/extension test results, in comparison with a typical conventional fabric. The test was conducted on 1 inch wide (25.4mm) strips, 80mm long, and in the weft direction only - the direction in which stretch is most important in the manufacture of timing belts.

- 4 -

TABLE

Load/extension characteristics for Timing
Belt Fabrics (weft direction)

| Load (Kg/in.) | Extension (%) | |
| --- | --- | --- |
| | Typical woven fabric | Knited fabric (Fig 2) |
| 10 | 81 | 128 |
| 20 | 95 | 152 |
| 30 | 106 | 168 |
| 40 | 117 | 181 |
| 50 | 129 | 195 |
| 60 | 149 | 207 |
| 70 | 169 | 218 |
| 80 | – | 233 |

An example of a fabric structure, eminently
suitable for use in the jacket of a timing belt as
described above, is whown in Fig. 2 of the drawing.

In this Figure, A is an extensible knitted warp
yarn, preferably with a resultant count in the range
78-500 dtex. B and C are inextensible warp inlay
yarns, preferably with resultant counts in the range
110-440 dtex. D is an extensible weft insertion
yarn, preferably with a resultant count of 78-1100 dtex.

In the diagram of Fig. 2, the threading of the
machine is as follows:

> A = Bar 1 - Full
> B = Bar 2 - Full
> C = Bar 3 - Full
> D = Weft

The machine gauge range is preferably between
44/2 and 6/2 gauge.

The warp direction yarns follow the arrangement:

| A | B | C |
|---|---|---|
| 2 | O | O |
| O | O | O |
| — | — | — |
| 4 | 4 | 2 |
| 6 | 4 | 2 |
| — | — | — |
| 2 | O | O |
| O | O | O |
| — | — | — |
| 4 | 2 | 4 |
| 6 | 2 | 4 |
| — | — | — |

The fabric structure shown in Fig. 2 is believed to be novel in its own right. Thus although when produced from yarns of the type described above, it is particularly suited to the production of driving belt jackets, it can equally be produced from yarns of different (for example inextensible) characteristics and so be suited to other end uses.

- 6 -

## CLAIMS

1.    A fabric for use as a cover fabric for a toothed driving belt, characterised in that it comprises a warp knitted base fabric formed from relatively fine extensible yarns of continuous man-made filaments, and at least one relatively course inextensible inlaid warp and an extensible weft insertion incorporated in and retained by the knitted base fabric.

2.    A fabric according to claim 1, characterised in that the inlaid warp or warps are composed of continuous filament or spun fibre yarns and the weft insertion yarn is composed of continuous man-made filaments.

3.    A fabric according to claim 2, characterised in that the knitted warp and weft insertion are of stretch nylon and the inlaid warp of high modulus nylon.

4.    A fabric according to claim 1, 2 or 3, characterised in that the inlaid warp yarns are disposed in parallel pairs, with one wale of the knitted base fabric between each pair.

5.    A toothed driving belt characterised in that the teeth are covered by a fabric according to any preceding claim.

*FIG. 1*

*FIG. 2*

0069589

FIG.3